# EUROPÄISCHE PATENTSCHRIFT

(11) **EP 0 941 649 B1**
(45) Veröffentlichungstag und Bekanntmachung des Hinweises auf die Patenterteilung: **12.06.2002**
(21) Anmeldenummer: 99103595.7
(22) Anmeldetag: 24.02.1999
(51) Int. Cl.: A01D 45/06

(54) **Hanferntmaschine**
Flax harvesting machine
Récolteuse de lin

(30) Priorität: 24.02.1998 EP 98103224
(43) Veröffentlichungstag der Anmeldung: 15.09.1999
(73) Patentinhaber: Kranemann, Hans-Helmuth, 17194 Lütgendorf (DE)
(72) Erfinder: Kranemann Hans-Hellmuth, 17194 Lütgendorf (DE); Scheppat Reinhard, 17214 Nossentiner Hütte (DE); Nowotny Rainer, 17326 Grünberg (DE)
(74) Vertreter: Jaap, Reinhard

(56) Entgegenhaltungen:
- FR-A- 1 520 475
- GB-A- 2 098 046
- US-A- 1 906 498
- US-A- 4 151 700
- US-A- 4 562 693

## Beschreibung

Die Erfindung betrifft ein Verfahren zum Mähen, Zerteilen, Quetschen, Knicken und Ablegen des Hanfes oder ähnlicher Pflanzen mit Mähwerken, Schneideinrichtungen, Quetsch- und Knickwalzen sowie Fördereinrichtungen für eine optimale Ablage zu einem Schwad.

Bekannte Maschinen mähen die Pflanzen, binden sie zu Garben, die auf den Boden abgelegt werden. Die Garben werden zu Hocken aufgestellt und nach dem Trocknen werden mit einer Dreschmaschine die Körner gewonnen. Das Stroh wird je nach Technologie der Fasergewinnung entweder sofort geborgen oder verbleibt zur Feldröste noch auf dem Acker.

Mit dieser Technologie können zwar Fasern und Körner in hoher Qualität bei geringen Verlusten gewonnen werden, entscheidender Nachteil jedoch ist der hohe Aufwand an manueller Arbeit für das Aufstellen der Garben zu Hocken und die Zuführung der Garben zur Dreschmaschine.

Ebenfalls bekannt ist der Einsatz modifizierter Halmfruchterntemaschinen für die Hanfernte.

Mit Mähdreschern werden die oberen mit Körnern besetzten Teile der Pflanzen abgemäht und gedroschen. Bei dieser Methode können unter günstigen klimatischen Bedingungen bei einem hohen Anteil reifer Körner gute Ergebnisse bei der Bergung der Körner erreicht werden.

Die Bergung des Strohes ist jedoch problematisch und verlustreich, weil der Mähdrescher einen großen Teil der Halme zerfahren hat. Außerdem führen die Faserbestandteile zu Verstopfungen und Havarien der Mähdrescher, die wiederum sehr hohe Instandsetzungsaufwendungen zur Folge haben.

Mit modifizierten Häckslern werden die Pflanzen gemäht, gehäckselt und in ein Schwad abgelegt.

Das Erntegut wird bei diesen Maschinen durch Einzugswalzen den Häckseltrommeln zugeführt, die das Erntegut stark verdichten.

Dieser, für das Häckseln der Halmfrüchte erwünschte Effekt, erzeugt ein stark verdichtetes Schwad, das durch mehrmaliges Wenden und Schwaden zusätzlich bearbeitet werden muß.

Bei diesen Arbeitsgängen fällt bereits ein hoher Anteil der Körner heraus und das Erntegut wird darüberhinaus mit Steinen und Erde verunreinigt. Diese Verunreinigungen führen zu erheblichen Havarien bei der Fasergewinnung.

Trotz des mehrmaligen Wendens und Schwadens, das ganz erheblich die Verfahrenskosten steigert, bietet das Schwad infolge seiner immer noch hohen Verdichtung nur ungenügende Voraussetzungen für die Trocknung und die Tauröste (Vorbereitung des Strohes zur besseren Faserablösung durch mikrobiologische Prozesse), weil die Pflanzenteile in dem verdichteten Schwad nicht ausreichend vom Tau benetzt werden. Auch die noch im Erntegut verbliebenen Körner können in dem verdichteten Schwad nicht trocknen und nachreifen.

Eine weitere Technologie sind stufenweise hinter- und übereinander angeordnete Mähwerke, die die Pflanzen in zwei oder drei Teile trennen und sie in voller Arbeitsbreite ablegen.

Zur Herstellung eines Schwades ist auch bei dieser Technologie ein nachfolgendes Schwaden und Wenden mit den o.g. Nachteilen erforderlich.

Schilferntemaschinen schneiden die Pflanzen mit Finger- oder Doppelmessermähwerken und führen sie in ihrer noch stehenden Position den Arbeitsorganen zum binden von Garben zu.

Auch diese Technologie kann infolge des ernormen Arbeitsaufwandes für die Manipulation der Garben zu Hocken und des Dreschens der Garben nicht eingesetzt werden.

Mit den modifizierten Halmfruchterntemaschinen können entweder nur das Stroh oder nur die Körner geerntet werden und das noch mit schlechter Qualität und vielen technischen Problemen. Die Spezialmaschinen zur Hanfernte älterer Bauart sowie auch die Schilferntemaschinen sind wegen ihrer zu geringen Produktivität nicht zur Hanfernte einsetzbar.

Der Erfindung liegt daher das technische Problem zugrunde, ein Verfahren zur Haufernte zu schaffen, bei dem unter Vermeidung der o.g. Mängel durch die Herstellung eines lockeren geordneten Schwades mit obenliegenden körnertragenden Pflanzenteilen eine optimale Trocknung und Tauröste des Erntegutes ermöglicht wird als Voraussetzung für eine einfache, verlustarme und vergleichsweise kostengünstige Bergung des Strohes und der Körner mit Räumund Sammelpressen, wobei infolge der optimalen Trocknung und Feldröste eine hohe Qualaität des Erntegutes gesichert ist.

Diese Aufgabe wird erfindungsgemäß dadurch gelöst, daß die Halme gemäht, von Förderelementen in vertikaler Position gehalten und zusammengeführt, mehrfach getrennt, gequetscht und so in einem hohen, lockeren geordneten Schwad abgelegt werden, bei dem die körnertragenden Pflanzenteile obenauf liegen.

Durch geeignete Leiteinrichtungen können auch die unteren Halmteile und die mit Körnern besetzten oberen Halmteile je in einem separaten Schwad abgelegt werden.

Bei der Ablage zu einem Schwad erfolgt die Körnergewinnung vorzugsweise während des Faseraufschlusses.

Bei der Technologie mit dem separaten Schwad aus körnertragenden Pflanzenteilen kann zur Körnergewinnung der Schwaddrusch angewendet werden mit bedeutend höherer Körnerqualität.

Die mit der Erfindung zu erzielenden Vorteile bestehen also darin, daß aus dem nachwachsenden Rohstoff Hanf Fasern und Körner in höchster Qualität erzeugt werden bei geringstem Arbeitsaufwand mit hoher Ernteleistung.

Die von einem oszillierenden oder rotierenden Schneidwerk getrennten Halme werden von den Förderelementen in vertikaler Position gehalten, zusammengeführt und den Schneideinrichtungen zum Zerteilen und den Quetsch- und Knickvorrichtungen zum Knicken und Quetschen zugeführt.

Die zwischen den Förderelementen übereinander angeordneten Schneideinrichtungen trennen die Halme in mehrere Teile.

Unmittelbar hinter den Schneideinrichtungen sind die Quetschund Knickvorrichtungen angeordnet die das Erntegut quetschen und knicken. Ebenso ist eine Anordnung der Quetsch - und Knickvorrichtungen auch im Bereich der Schneidwerke oder vor den Schneidwerken möglich.

Die Quetsch- und Knickvorrichtungen können Teil der Förderelemente oder auch gesonderte Bauteile sein.

Die getrennten, gequetschten und geknickten Halmteile werden durch den Fall aufeinander zu einem hohen, lockeren, geordneten Schwad mit obenaufliegenden körnertragenden Pflanzenteilen abgelegt.

Nachgeordnete Leiteinrichtungen können auch die körnertragenden Pflanzenteile zu einem separaten Schwad ablegen.

In diesem Fall kann mit dem Schwaddrusch eine höhere Körnerqualität erzielt werden.

Sehr vorteilhaft ist bei der Erfindung, daß die blattlosen Stengel teile unten, die mit Blättern besetzten in der Mitte und die körnertragenden obenauf liegen - somit das Schwad infolge der lockeren Packung gut trocknet wegen der Durchlüftung und die Stengelteile aber in Bodennähe auch gut vom Tau befeuchtet werden.

Die obenliegenden körnertragenden Pflanzenteile haben beste Voraussetzungen zur schnellen Trocknung, die für eine hohe Körnerqualität erforderlich ist.

Ein Ausfühungsbeispiel der Erfindung ist nachfolgend beschrieben.

Es zeigen:

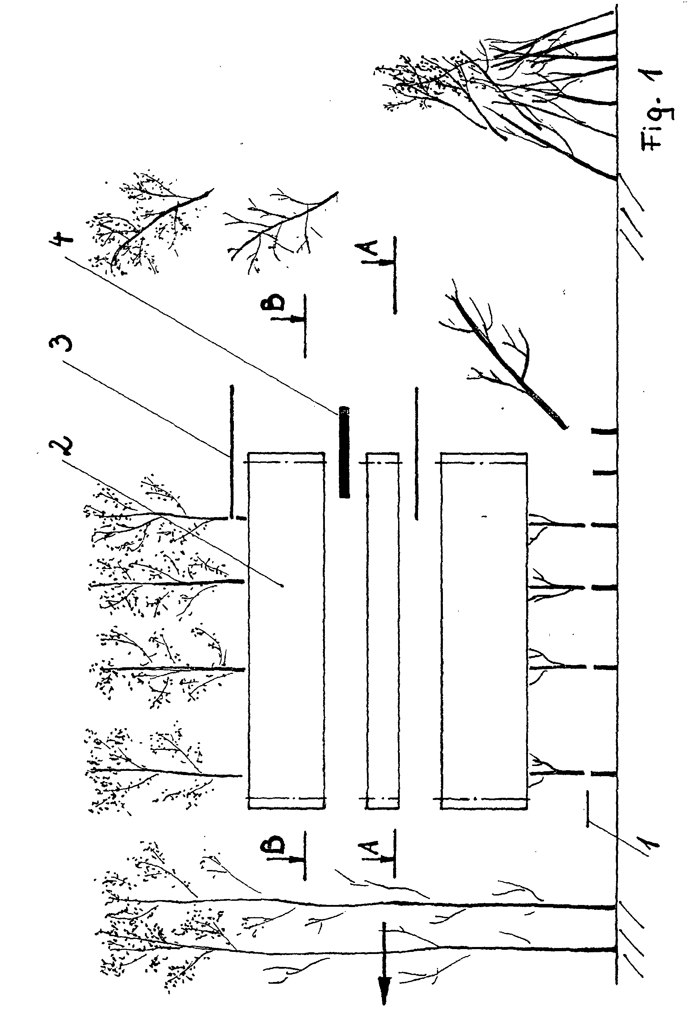

Fig. 1 eine schematische Vorderansicht

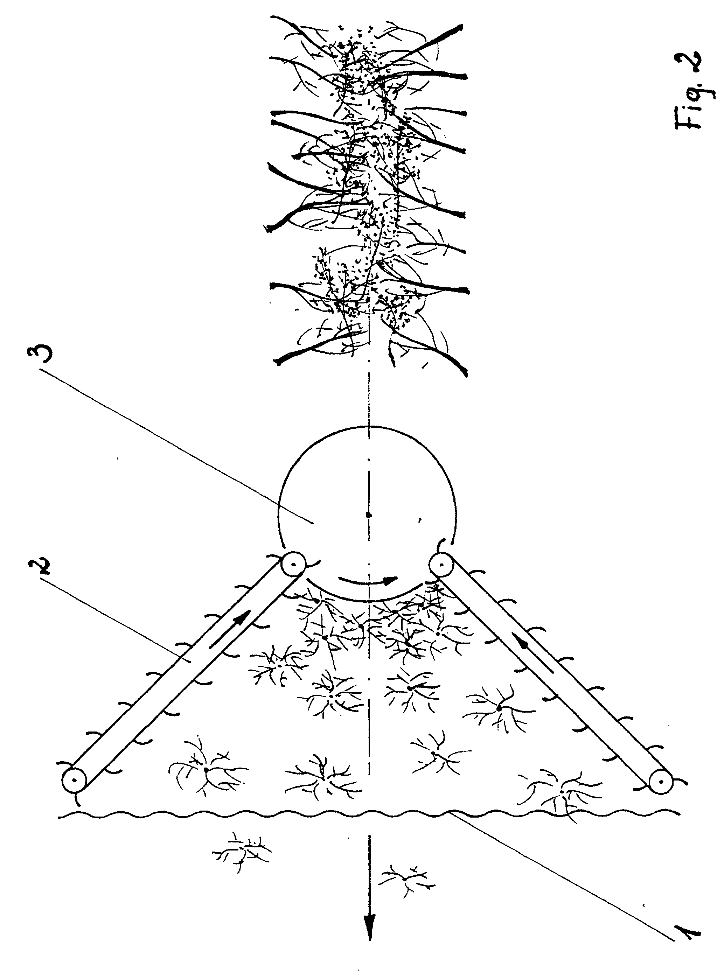

Fig. 2 den Schnitt A-A

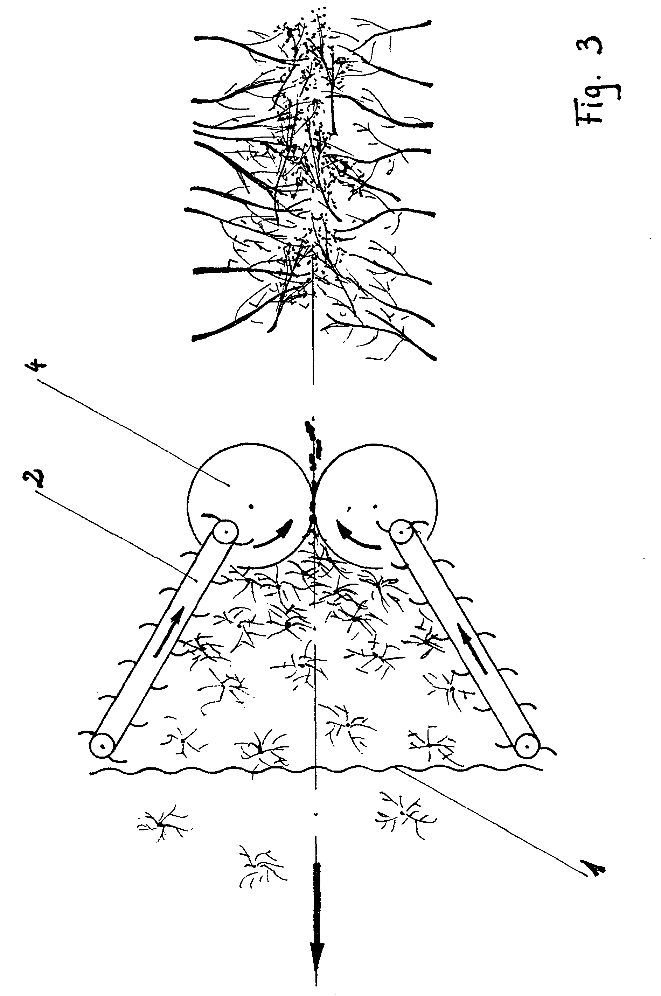

Fig. 3 den Schnitt B-B

Ein Schneidwerk 1 trennt die Halme vom untererdischen Teil. Drei übereinander angeordnete Förderer 2, die auf der Tragseite Mitnehmer haben, erfassen die von Schneidwerk 1 abgetrennten Halme, führen sie zur Mitte zusammen und den beiden schnell rotiernden Kreissägen 3 zu.

Zwei gegenläufige Quetschwalzen 4 erfassen den mittleren Halmteil, um ihn während des Durchzuges zu quetschen und zu knicken.

Die Teilung der Halme in drei Teile, das Knicken und die Abwurfparabel der Halmteile, hervorgerufen durch die schnell rotierenden Kreissägen bewirkt, daß viele Halme sich stehend bis geneigt auf dem Boden plazieren und so für den Aufbau eines geordneten, lockeren Schwades sorgen.

### Bezugszeichen :

- 1: Schneidwerk
- 2: Förderer
- 3: Kreissägen
- 4: Quetschwalzen

## Patentansprüche

1. Verfahren zur Ernte von Hanf und ähnlichen Pflanzen mit Schneidwerken (1), Schneideinrichtungen (3), Quetsch- und Knickwalzen (4) sowie Fördereinrichtungen (2), **dadurch gekennzeichnet, daß** die Hanfpflanzen in ihrer aufrecht stehenden Form unmittelbar über dem Erdboden von den Schneidwerken (1) vom untererdischen Teil getrennt und dann von Fördererern (2) erfaßt werden und weiterhin in ihrer naturgegebenen aufrechten Form zusammengeführt, den Schneideinrichtungen (3) zur Trennung in mehrere Teile und die mittleren Halmteile den Quetschwalzen (4) zum Quetschen und Knicken übergeben werden, um dann die Pflanzenteile zu einem lockeren hohen Schwad abzulegen bzw. zu einem separaten Schwad, bestehend aus Halmen ohne Körner und einem separaten Schwad aus körnerbesetzten Halmen.

## Claims

1. A method for harvesting hemp and similar plants with cutting mechanisms (1), choppers (3), crushing and breaking rollers (4) and conveying means (2), **characterised in that** the hemp plants are separated directly above the ground while upright from the underground part by the cutting mechanisms (1) and then gripped by conveyors (2) and additionally brought together in their natural upright form and transferred to the choppers (3) for division into a plurality of portions, the middle stalk portions being transferred to the crushing rollers (4) for crushing and breaking, in order then to deposit the plant portions in a loose, tall swathe or in a separate swathe consisting of stalks without seeds and a separate swathe of stalks with seeds.

## Revendications

1. Procédé de récolte de chanvre ou plantes analogues, comprenant des mécanismes de coupe (1), des installations de coupe (3), des cylindres d'écrasement et de pilage (4) ainsi que des installations de transfert (2),
**caractérisé en ce que**
les outils de coupe (1) coupent les plans de chanvre en position debout, directement au-dessus du sol pour les séparer de leur partie souterraine ensuite les convoyeurs (2) les prennent et les regroupent dans leur forme debout, naturelle, les transmettent aux installations de coupe (3) pour les séparer en plusieurs parties dont les tiges moyennes aux cylindres broyeurs (4) pour les broyer et les plier, pour ensuite déposer les parties de plantes sous la forme d'un andain souple, en hauteur, ou sous la forme d'un andain séparé composé des tiges sans les graines et d'un andain séparé avec les tiges chargées de graines.
